# EUROPEAN PATENT SPECIFICATION

(11) **EP 3 524 095 B1**
(45) Date of publication and mention of the grant of the patent: **03.06.2020**
(21) Application number: 19156403.8
(22) Date of filing: 11.02.2019
(51) Int. Cl.: A47B 9/00, A47C 20/04, A47C 7/50, H02J 50/20, A47B 23/00

(54) **FURNITURE SYSTEM**
MÖBELSYSTEM
SYSTÈME DE MEUBLES

(30) Priority: 12.02.2018 DE 102018103066
(43) Date of publication of application: 14.08.2019
(73) Proprietor: LOGICDATA Electronic & Software Entwicklungs GmbH, 8530 Deutschlandsberg (AT)
(72) Inventor: Lukas, Stefan, 8504 Preding (AT)
(74) Representative: Epping - Hermann - Fischer

(56) References cited:
- DE-A1-102014 110 956
- TW-A- 201 707 612
- US-A1- 2017 135 490

## Description

The present disclosure relates to a furniture system comprising, in particular, an electrically adjustable piece of furniture.

Adjustable furniture is known both in the office furniture sector and in the home sector. The most common designs in the office furniture sector are, for example, electrically adjustable tables or chairs, while in the home sector electrically adjustable beds, seating furniture or reclining furniture are known.

Adjustable pieces of furniture are often part of a furniture system, which in addition to the piece of furniture also has one or more other system components, such as a manual operating device. Such system components regularly have rechargeable batteries or accumulators to make them independent of a mains voltage. However, the latter must be charged regularly to enable operation. For this purpose, suitable charging stations are usually available for the system components into which the system component has to be introduced for charging.

For example, DE 10 2014 110 956 A1 discloses an adjustable bed with a manual operating device that can be charged inductively.

One objective to be achieved is to specify an improved charging concept that makes it easier to charge an energy store of a system component of a furniture system.

This objective is achieved by means of the independent claim. Modifications and developments are indicated in the dependent claims.

The improved charging concept is based on the idea of charging an electrical energy store of a system component that is connected to an electrically adjustable piece of furniture via a wireless or contactless process. For this purpose, a furniture system with the electrically adjustable piece of furniture and an energy transmission device arranged on or in the piece of furniture is proposed, which can provide the necessary energy for charging the energy store without physical contact with the system component. The system component further comprises a charging circuit for charging the energy store which is arranged to at least partially receive the energy delivered by the energy transmission device and to use it for charging the energy store.

Preferably, the energy transmission device is adapted to deliver the energy based on a radio wave based method, in particular a radio frequency, RF, method. Thus, respective energy stores can be charged by one or more system components without special effort of a user in order to ensure a continuous use of the system component.

In an exemplary implementation of the improved charging concept, a furniture system with an electrically adjustable piece of furniture, a system component and an energy transmission device is proposed. The piece of furniture comprises at least one actuator for adjusting the piece of furniture and a controller for controlling the actuator. The energy transmission device is arranged on or in the piece of furniture and is adapted to receive energy from a supply network and to emit it wirelessly. The system component has an electrical energy store for supplying a voltage to the system component and a charging circuit for charging the energy store. The charging circuit is arranged to at least partially receive the energy delivered by the energy transmission device without physical contact with the energy transmission device and to use it to charge the energy store. The energy store is designed, for example, as an accumulator or rechargeable battery.

The supply network is, for example, a direct current network or an alternating current network, i.e. in particular a 230 V or 115 V power network. The energy transmission device can be supplied with direct current, for example via the control unit or directly from a power supply unit, and is thus at least indirectly connected to the AC mains.

According to the invention, the system component is configured for a communication connection with the controller and with another system element of the furniture system. In general, such system elements may be formed by a furniture controller, any other system component with a wireless chargeable energy store, a data collector, data node or communication hub, or other components of the furniture system. For example, a data collector, data node or communication hub can be implemented by the LOGIClink product from Logicdata.

In principle, inductive methods can also be used for energy transmission between the energy transmission device and the charging circuit of the system component. However, these regularly require that an energy receiving device of the charging circuit and the energy transmission device for charging the energy store are brought in close proximity to each other, especially with small maximum distances of less than 5 cm. Therefore, it seems more advantageous to transmit the energy based on a radio wave-based method, in particular an RF method. An RF-based charging technique has the advantage that not only can longer distances be bridged, but also that the energy receiving device does not have to be aligned excessively precisely with respect to the energy transmission device.

For example, the energy transmission device and the energy receiving device are designed to transmit sufficient energy to charge the energy storage device up to a distance of 50 cm to 150 cm, in particular up to a distance of 60 cm to 90 cm, between the energy transmission device and the energy receiving device. The maximum distance sufficient for the energy transfer is thus, for example, within the specified distance ranges. Such distances can be achieved, for example, with the described radio wave-based or RF method.

For example, the charging circuit has an energy receiving device and a charging controller which is configured to control the charging of the energy store with the energy received by the energy receiving device.

For example, the energy transmission device may be located in a housing of the controller or another furniture component attached to the piece of furniture. Preferably the controller or the other furniture component has a direct or indirect connection to the mains connection of the piece of furniture. Alternatively, it is also possible to arrange the energy transmission device in its own housing. There are various possibilities for arranging the energy transmission device in relation to the piece of furniture.

For example, the piece of furniture is designed as a height-adjustable table, in particular as an office table, with the energy transmission device arranged under a table top of the table. In such a configuration, the system component can be formed by an office chair, the energy storage device being designed to supply a sensor and/or a chair actuator of the office chair. The chair actuator can be used, for example, to adjust the height of the office chair. One or more sensors in the office chair can measure different measured values in connection with the office chair, for example a weight load, a weight distribution, an inclination, a height adjustment or the like. For example, such sensors are arranged in or on a gas spring of an office chair.

In an alternative configuration, the piece of furniture is implemented as a bed with adjustable head part and/or an adjustable foot part, in particular for a bedroom. The energy transmission device is arranged in or on a longitudinal frame of the bed.

In another alternative, the piece of furniture is implemented as an adjustable reclining chair, wherein the energy transmission device is arranged in a frame of the reclining chair, in particular under a cover of the reclining chair.

When the piece of furniture is designed as a bed or recliner, the system component is formed, for example, by a side table, wherein the energy store is designed to supply an electrically operated component of the side table. In various configurations of the piece of furniture, the system component or a further system component is formed, for example, by a manual operating device which is configured for a wireless communication connection with the controller. The electrical energy store is designed in particular to supply the manual operating device during an operating action.

The system component or a further system component can also be formed by one of the following:
- a lighting component;
- an electrically height-adjustable armchair or chair;
- an electrically adjustable backrest, in particular an armchair or chair ;
- an electrically adjustable monitor holder ;
- a sensor component which is in communication with the controller during an adjustment of the piece of furniture.

The listed pieces of furniture do not represent a conclusive selection of possible adjustable pieces of furniture. Other pieces of furniture and system components can also be equipped with the improved charging concept. Such pieces of furniture and system components are preferably used in the home or living area or in the office.

If the range of the energy transmission is not too limited, as for example with a radio wave-based or RF method, the system component or system components can also be charged at will during operation of the furniture system without the system components having to be brought into a special charging position. For example, if the energy transmission device is mounted underneath a tabletop, both a manual control unit for adjusting the table and an office chair with corresponding charging circuits can be charged at almost any position in the work area.

Also with an adjustable bed, it is almost irrelevant where a manual operating device is placed for charging. For example, the energy transmission device is mounted in the bed frame in such a way that charging is possible in the area of a bedside table or a side table.

Since no exact alignment of the energy transmitter or energy transmission device and the energy receiver or energy receiving device is required, handling is made easier for the user. Similarly, with the improved charging concept, it is no longer necessary to provide special mechanisms to ensure that a component to be charged is correctly aligned with the energy transmitter, such as mechanical arms, locks or optical feedback to detect that a component is correctly aligned. There is also no need for docking stations or charging stations with which a user would need to connect the system component.

It is also possible for several system components to simultaneously receive energy from the energy transmission device to charge their respective energy stores.

In radio wave-based or RF processes, the maximum transmittable power can be set to a certain level, for example to limit the electromagnetic radiation density and also to keep the losses in the energy transmitter, i.e. the energy transmission device, low. This usually results in a slow charging process. However, this is of secondary importance, especially for the above-mentioned application for charging batteries or accumulators which supply one or more system components of a furniture system with energy and which do not have to be operated continuously. For example, the system components in the office area can remain in their traditional places as long as they are within reach of one or more energy transmission devices. The energy store(s) can thus be continuously recharged and always provide sufficient energy for the use of the system component. For example, in this way the energy stores collect enough energy overnight to allow sufficient use during the day.

Although wireless energy transmission is designed to comply with safety regulations, some people find that electromagnetic radiation, especially in radio wave-based or RF processes, is harmful to their health. For this purpose, the furniture system may contain mechanisms that allow the user to temporarily prevent charging. In the simplest case, the charging process can be activated or deactivated via the system's remote control. However, it is also possible to use a time control or a presence detection integrated in the furniture system. It is also possible to make activation or deactivation dependent on a charge level of the energy store.

Such a switch-off can, for example, be used in a bed system. In this case, the user can, for example, switch off charging during the night or the switch-off is automatically time-dependent. The energy store can then be charged during the day or when the user is not using the bed. A similar scheme can also be transferred to an office desk, which is then preferably charged at night or when the user is absent from the desk.

In the following, the invention will be explained in detail with reference to the drawings using exemplary embodiments. Components that are functionally identical or have an identical effect can be provided with identical reference signs. Identical components or components with identical functions may only be explained with reference to the figure in which they appear first. The explanation is not necessarily repeated in subsequent figures.

In the drawings:
- Figure 1: shows an example of a furniture system with an electrically adjustable piece of furniture in the form of a table;
- Figure 2: shows a detail of another example of a furniture system with an electrically adjustable piece of furniture in the form of a table;
- Figure 3: shows a schematic block diagram of an example of a furniture system;
- Figure 4: shows another example of a furniture system with an electrically adjustable piece of furniture in the form of a table;
- Figure 5: shows the example of Figure 4 in another view;
- Figure 6: an example of a furniture system with an electrically adjustable piece of furniture in the form of a bed; and
- Figure 7: an example of a furniture system with an electrically adjustable piece of furniture in the form of a reclining chair.

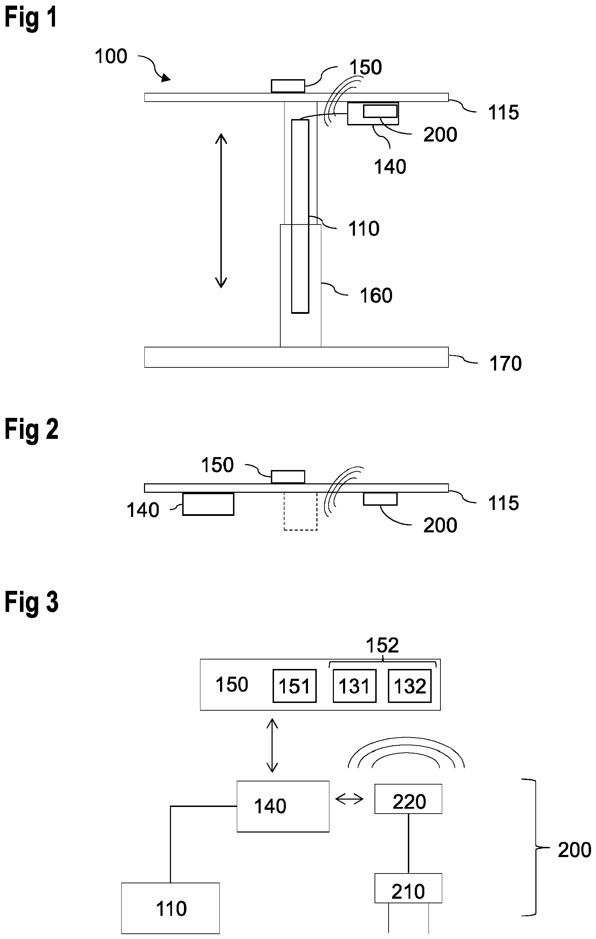

Figure 1 shows an example implementation of a furniture system with an electrically adjustable piece of furniture in the form of a table 100. The table 100 is designed, for example, as a height-adjustable table, in particular an office table, whereby the height of a table top 115 can be adjusted via an actuator 110, which is arranged in a table frame 160. Actuator 110 is controlled, for example, by a controller 140. Table frame 160, for example, is designed as a telescopic column. The table 100 also includes a table foot 170.

Via a manual operating device 150, which is shown lying on the table top 115 as an example, a user can transmit corresponding operating commands to the controller 140 in order to effect a height adjustment via the actuator 110.

The furniture system also includes an energy transmission device 200, which is installed in the present illustration in the controller 140. The energy transmission device 200 is designed to receive energy from a supply network, such as a direct current network or an alternating current network, in particular a 230 V or 115 V power network, and to deliver it wirelessly. The energy transmission device 200 can also be supplied with direct current via the controller 140 or from an not shown power supply unit and is therefore at least indirectly connected to the AC mains.

The manual operating device 150 as an example of a system component is configured for a communication connection with the controller 140. In addition, the manual operating device 150 has an electrical energy store for supplying a voltage to the system component, which is not shown for reasons of clarity, and a charging circuit for charging the energy store, which is also not shown for reasons of clarity. The charging circuit is arranged to at least partially receive the energy delivered by the energy transmission device 200 without physical contact with the energy transmission device and to use it to charge the energy store. This is symbolically represented in Figure 1 by the energy waves emanating from the energy transmission device 200.

Figure 2 shows an alternative implementation that is basically based on the implementation shown in Figure 1. In contrast to Figure 1, only the energy transmission device 200 is arranged separately from the controller 140 below the tabletop 115.

Figure 3 shows as an example a schematic block diagram of an example of a furniture system, in particular the components used for the operation of the piece of furniture and wireless charging. Among other things, the energy transmission device 200 is shown, which is formed by a mains connection 210 as a connection to the mains voltage and a mains voltage-side module 220. The mains voltage-side module 220, for example, is in connection with the controller 140, especially in a communication connection.

Figure 3 also shows the manual operating device 150, with the included components of an energy store 151 and a charging circuit 152, which receives energy from the mains voltage-side module 220. For this purpose, the charging circuit 152 comprises an energy receiver 132 and a charging controller 131 arranged to control the charging of the energy store 151 with the energy received by the energy receiver 132.

Although Figure 3 symbolically shows only one system component in the form of the manual operating device 150, there may also be other system components in the furniture system which charge corresponding energy stores with the energy emitted by the energy transmission device 200. In particular, simultaneous charging is also possible. As already mentioned, wireless energy transmission can take place, for example, using a radio wave-based process, in particular an RF process. Thus also larger distances, for instance up to a distance of 50 to 150 cm, in particular up to a distance of 60 to 90 cm, can be sufficient to transmit sufficient energy for charging the energy storage 151. Accordingly, the system component, for example the manual operating device 150, can be positioned anywhere on the piece of furniture or table for charging.

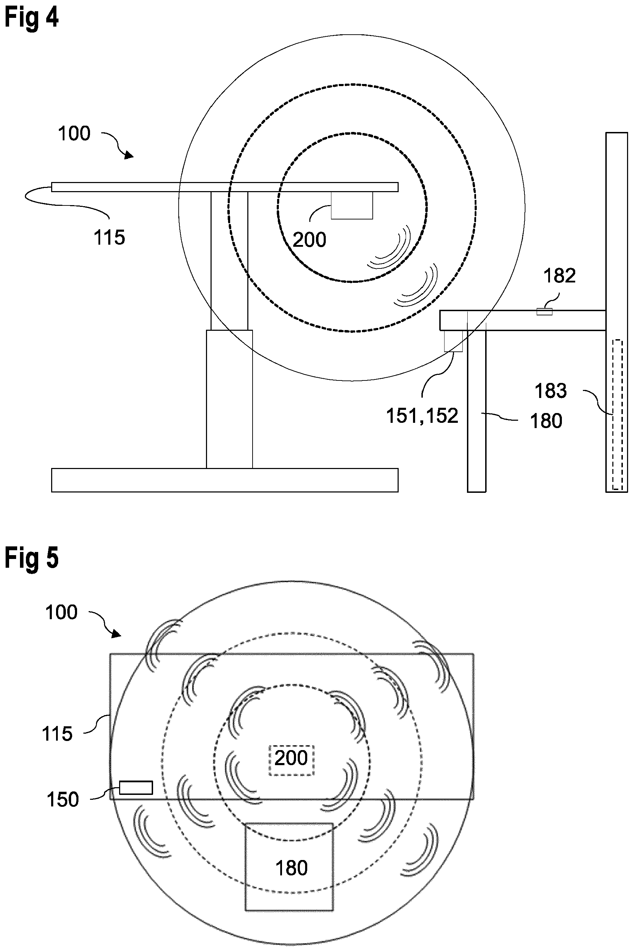

Figure 4 shows another example implementation in accordance with the improved charging concept, in which the adjustable piece of furniture is designed as table 100. In contrast to Figure 1, the system component shown is an office chair 180 which is equipped, for example, with at least one sensor 182 and/or a chair actuator 183 for height adjustment of the office chair. An energy supply for the sensor 182 or the associated sensor technology or the chair actuator 183 is exclusively provided by the energy store 151, which is charged by means of the charging circuit 152 with the energy transmitted by the energy transmission device 200. The energy transmission device 200, for example, is arranged in the front middle table area in order to keep the distance to the office chair 180 as short as possible.

Figure 5 shows a plan view of the arrangement shown in Figure 4, in which the arrangement of the energy transmission device 200 under the table top 115 is clearly visible. For example, the energy transmission device 200 is arranged centrally with respect to a longitudinal axis of the table, but eccentrically with respect to the transverse axis, in particular closer to a side of the tabletop facing the user.

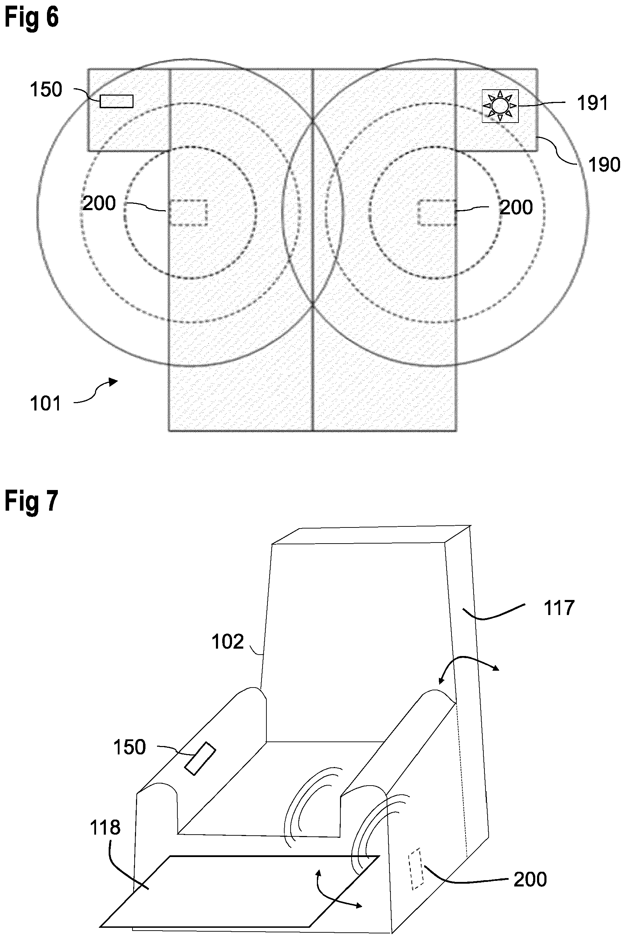

The improved charging concept is not only applicable to furniture systems with tables, but can also be applied to other pieces of furniture. For example, Figure 6 shows a furniture system in which the piece of furniture is embodied as a bed 101, in particular as a double bed, for example with an adjustable head section and/or adjustable foot section. Corresponding actuators are not shown for reasons of clarity. Similar to the configurations described above, a controller can be arranged in a frame or bedstead of the bed 101.

In the illustration of Figure 6, two energy transmission devices 200 are shown, each on an outward side of the frame, in order to enable energy transmission, particularly in the area of a bedside table or side table 190. This in turn makes it possible to charge a manual operating device 150, which is placed on one of the bedside tables or side tables 190. Furthermore, the side table 190 is equipped with a lighting component, for example an LED light 191. For this purpose, the side table 190 is equipped with a corresponding energy store for supplying the lighting component and a charging circuit for charging the energy store, whereby the charging circuit at least partially uses the energy transmitted by the energy transmission device 200 for charging. Instead of or in addition to this, other electrically operated components can also be supplied by the energy store, for example actuators in an electrically adjustable side table. In the case of a possible implementation as a single bed, it may also be sufficient to provide a single energy transmission device 200 in the bed frame.

Figure 7 shows a further possible configuration of the furniture system in which the piece of furniture is implemented as an adjustable reclining chair 102. For example, the reclining chair 102 has an adjustable back section 117 and/or an adjustable foot section 118. An energy transmission device 200 is mounted in a frame of the recliner, in particular under a cover of the recliner 102. As an example, a manual operating device 150 is again shown, which can be charged in the manner already described by the energy transmitted by the energy transmission device 200.

In other configurations, the side table 190 has a USB charging interface which is fed from the energy store of the side table to enable charging of a mobile phone, for example. It is also possible to supply other lighting elements or sensors with power from the energy store.

With regard to the energy transfer procedures in the implementations according to Figure 6 and Figure 7, reference is made to the more detailed configurations above, in particular with regard to the table 100.

## Claims

1. A furniture system with an electrically adjustable piece of furniture (100, 101, 102), a system component (150, 180, 190) and an energy transmission device (200), wherein
- the piece of furniture (100, 101, 102) comprises at least one actuator (110) for adjusting the piece of furniture (100, 101, 102) and a controller (140) for controlling the actuator (110);
- the energy transmission device (200) is arranged on or in the piece of furniture (100, 101, 102) and is arranged to receive energy from a supply network and to deliver it wirelessly ;
- the system component (150, 180, 190) is configured for a communication connection with another system element of the furniture system and with the controller (140) and has an electrical energy store (151) for supplying a voltage to the system component (150, 180, 190) and a charging circuit (152) for charging the energy store (151); and
- the charging circuit (152) is configured to at least partially receive the energy output from the energy transmission device (200) without physical contact with the energy transmission device (200) and to use it to charge the energy store (151);
and wherein the furniture system is implemented with one of the following configurations:
- the piece of furniture is implemented as a height-adjustable table (100), in particular as an office table, wherein the energy transmission device (200) is arranged under a table top of the table (100) and the system component is formed by an office chair (180), wherein the energy store (151) is arranged to supply a sensor (182) and/or a chair actuator (183) of the office chair (180);
- the piece of furniture is implemented as a bed (101) with an adjustable head part and/or adjustable foot part, in particular for a bedroom, wherein the energy transmission device (200) is arranged in or on a longitudinal frame of the bed (101) and the system component is formed by a side table (190), wherein the energy store (151) is configured to supply an electrically operated component of the side table (190);
- the piece of furniture is implemented as an adjustable reclining chair (102), wherein the energy transmission device (200) is arranged in a frame of the reclining chair (102), in particular under a cover of the reclining chair (102) .

2. The furniture system according to claim 1, wherein the energy transmission device (200) is configured to deliver the energy based on a radio wave based method, in particular a high frequency method.

3. The furniture system according to claim 1 or 2, wherein the charging circuit (152) comprises an energy receiving device (132) and a charging controller (131) which is configured to control the charging of the energy store (151) with the energy received by the energy receiving device (132) .

4. The furniture system according to claim 3, wherein the energy transmission device (200) and the energy receiving device (132) are designed to transmit sufficient energy between the energy transmission device (200) and the energy receiving device (132) for charging the energy store (151) up to a distance of 50 cm to 150 cm, in particular up to a distance of 60 cm to 90 cm.

5. The furniture system according to one of claims 1 to 4, wherein the energy transmission device (200) is arranged in a housing of the controller (140) or a furniture component attached to the piece of furniture.

6. The furniture system according to one of claims 1 to 4, wherein the energy transmission device (200) is arranged in a separate housing.

7. The furniture system according to one of claims 1 to 6, wherein the piece of furniture is implemented as the adjustable reclining chair (102) and the system component is formed by a side table (190), wherein the energy store (151) is configured to supply an electrically operated component of the side table (190).

8. The furniture system according to one of the preceding claims, wherein the system component or a further system component is formed by a manual operating device (150) adapted for wireless communication connection with the controller (140), wherein the electrical energy store (151) is adapted for supplying the manual operating device (150) during an operating action.

9. The furniture system according to one of the preceding claims wherein the system component or a further system component of the furniture system is formed by one of the following:
- a lighting component (191);
- an electrically height-adjustable armchair or chair ;
- an electrically adjustable backrest ;
- an electrically adjustable monitor holder ;
- a sensor component which is in communication with the controller (140) during an adjustment of the piece of furniture (100, 101, 102).

10. The furniture system according to one of the preceding claims that is configured to deactivate the energy transmission device (200) independently of an operation of the piece of furniture.

11. The furniture system according to claim 10, wherein the deactivation of the energy transmission device (200) is triggered by a user of the furniture system and/or by a presence detection of the user at the furniture system and/or as a function of a charging state of the energy store and/or time-controlled.

## Patentansprüche

1. Möbelsystem mit einem elektrisch verstellbaren Möbelstück (100, 101, 102), einer Systemkomponente (150, 180, 190) und einer Energieübertragungseinrichtung (200), wobei
- das Möbelstück (100, 101, 102) wenigstens einen Aktuator (110) zur Verstellung des Möbelstücks (100, 101, 102) sowie eine Steuerung (140) zur Ansteuerung des Aktuators (110) aufweist;
- die Energieübertragungseinrichtung (200) an oder in dem Möbelstück (100, 101, 102) angeordnet ist und eingerichtet ist, Energie aus einem Versorgungsnetz zu beziehen und diese drahtlos abzugeben;
- die Systemkomponente (150, 180, 190) für eine Kommunikationsverbindung mit einem anderen Systemelement des Möbelsystems und mit der Steuerung (140) eingerichtet ist und einen elektrischen Energiespeicher (151) zur Spannungsversorgung der Systemkomponente (150, 180, 190) und eine Ladeschaltung (152) zur Aufladung des Energiespeichers (151) aufweist; und
- die Ladeschaltung (152) eingerichtet ist, die von der Energieübertragungseinrichtung (200) abgegebene Energie ohne physischen Kontakt zur Energieübertragungseinrichtung (200) zumindest teilweise zu empfangen und zur Aufladung des Energiespeichers (151) zu verwenden;
und wobei das Möbelsystem mit einer der folgenden Konfigurationen ausgeführt ist:
- das Möbelstück ist als höhenverstellbarer Tisch (100), insbesondere als Bürotisch, ausgeführt, wobei die Energieübertragungseinrichtung (200) unter einer Tischplatte des Tisches (100) angeordnet ist und die Systemkomponente ist durch einen Bürostuhl (180) gebildet, wobei der Energiespeicher (151) zur Versorgung eines Sensors (182) und/oder eines Stuhlaktors (183) des Bürostuhls (180) eingerichtet ist;
- das Möbelstück ist als Bett (101) mit verstellbarem Kopfteil und/oder verstellbarem Fußteil, insbesondere für ein Schlafzimmer, ausgeführt, wobei die Energieübertragungseinrichtung (200) in oder an einem Längsrahmen (161) des Betts (101) angeordnet ist und die Systemkomponente ist durch einen Beistelltisch (190) gebildet, wobei der Energiespeicher (151) zur Versorgung einer elektrisch betriebenen Komponente des Beistelltisches (190) eingerichtet ist;
- das Möbelstück ist als verstellbarer Liegesessel (102) ausgeführt, wobei die Energieübertragungseinrichtung (200) in einem Gestell des Liegesessels (102) angeordnet ist, insbesondere unter einem Überzug des Liegesessels (102).

2. Möbelsystem nach Anspruch 1, bei dem die Energieübertragungseinrichtung (200) eingerichtet ist, die Energie basierend auf einem funkwellenbasierten Verfahren, insbesondere einem Hochfrequenz-Verfahren, abzugeben.

3. Möbelsystem nach Anspruch 1 oder 2, bei dem die Ladeschaltung (152) eine Energieempfangseinrichtung (132) und eine Ladesteuerung (131) umfasst, die eingerichtet ist, die Aufladung des Energiespeichers (151) mit der durch die Energieempfangseinrichtung (132) empfangenen Energie zu steuern.

4. Möbelsystem nach Anspruch 3, bei dem die Energieübertragungseinrichtung (200) und die Energieempfangseinrichtung (132) eingerichtet sind, bis zu einer Entfernung von 50 cm bis 150 cm, insbesondere bis zu einer Entfernung von 60 cm bis 90 cm, zwischen der Energieübertragungseinrichtung (200) und der Energieempfangseinrichtung (132) ausreichend Energie zur Aufladung des Energiespeichers (151) zu übertragen.

5. Möbelsystem nach einem der Ansprüche 1 bis 4, bei dem die Energieübertragungseinrichtung (200) in einem Gehäuse der Steuerung (140) oder einer Möbelkomponente, die an dem Möbelstück befestigt ist, angeordnet ist.

6. Möbelsystem nach einem der Ansprüche 1 bis 4, bei dem die Energieübertragungseinrichtung (200) in einem eigenen Gehäuse angeordnet ist.

7. Möbelsystem nach einem der Ansprüche 1 bis 6, bei dem das Möbelstück als der verstellbare Liegesessel (102) ausgeführt ist und die Systemkomponente durch einen Beistelltisch (190) gebildet ist, wobei der Energiespeicher (151) zur Versorgung einer elektrisch betriebenen Komponente des Beistelltisches (190) eingerichtet ist.

8. Möbelsystem nach einem der vorherigen Ansprüche, bei dem die Systemkomponente oder eine weitere Systemkomponente durch ein Handbediengerät (150) gebildet ist, welches für eine drahtlose Kommunikationsverbindung mit der Steuerung (140) eingerichtet ist, wobei der elektrische Energiespeicher (151) zur Versorgung des Handbediengeräts (150) während eines Bedienvorgangs eingerichtet ist.

9. Möbelsystem nach einem der vorherigen Ansprüche, bei dem die Systemkomponente oder eine weitere Systemkomponente des Möbelsystems durch eines der folgenden gebildet ist:
- eine Beleuchtungskomponente (191);
- ein elektrisch höhenverstellbarer Sessel oder Stuhl;
- eine elektrisch verstellbare Lehne;
- eine elektrisch verstellbare Monitorhalterung;
- eine Sensorkomponente, die während einer Verstellung des Möbelstücks (100, 101, 102) in Kommunikation mit der Steuerung (140) steht.

10. Möbelsystem nach einem der vorherigen Ansprüche, welches eingerichtet ist, die Energieübertragungseinrichtung (200) unabhängig von einem Betrieb des Möbelstücks zu deaktivieren.

11. Möbelsystem nach Anspruch 10, bei dem die Deaktivierung der Energieübertragungseinrichtung (200) ausgelöst durch einen Benutzer des Möbelsystems und/oder durch eine Anwesenheitserkennung des Benutzers am Möbelsystem und/oder in Abhängigkeit eines Ladestands des Energiespeichers und/oder zeitgesteuert erfolgt.

## Revendications

1. Un système de meubles avec un meuble ajustable électriquement (100, 101, 102), un composant de système (150, 180, 190) et un dispositif de transmission d'énergie (200), dans lequel
- le meuble (100, 101, 102) comprend au moins un actionneur (110) pour ajuster le meuble (100, 101, 102) et un contrôleur (140) pour commander l'actionneur (110) ;
- le dispositif de transmission d'énergie (200) est disposé sur ou dans le meuble (100, 101, 102) et est agencé pour recevoir de l'énergie d'un réseau d'alimentation et pour la fournir sans fil ;
- le composant de système (150, 180, 190) est configuré pour une connexion de communication avec un autre élément de système du système de meubles et avec le contrôleur (140) et possède un accumulateur d'énergie électrique (151) pour l'alimentation en tension du composant de système (150, 180, 190) et un circuit de charge (152) pour charger l'accumulateur d'énergie (151) ; et
- le circuit de charge (152) est configuré pour recevoir au moins partiellement l'énergie produite par le dispositif de transmission d'énergie (200) sans contact physique avec celui-ci et pour l'utiliser pour charger le accumulateur d'énergie (151) ;
et dans lequel le système de meubles est mis en œuvre avec l'une des configurations suivantes :
- le meuble est réalisé sous la forme d'une table (100) ajustable en hauteur, en particulier d'une table de bureau, le dispositif de transmission d'énergie (200) étant disposé sous un plateau de la table (100) et le composant du système étant formé par une chaise de bureau (180), le accumulateur d'énergie (151) étant conçu pour alimenter un capteur (182) et/ou un actionneur de chaise (183) de la chaise de bureau (180) ;
- le meuble est réalisé sous la forme d'un lit (101) avec une partie de tête réglable et/ou une partie de pied réglable, en particulier pour une chambre à coucher, le dispositif de transmission d'énergie (200) étant disposé dans ou sur un cadre longitudinal du lit (101) et le composant du système étant formé par une table d'appoint (190), le accumulateur d'énergie (151) étant configuré pour alimenter un composant à commande électrique de la table d'appoint (190) ;
- le meuble est réalisé sous la forme d'une chaise longue ajustable (102), le dispositif de transmission d'énergie (200) étant disposé dans un cadre de la chaise longue (102), en particulier sous une housse de la chaise longue (102) .

2. Le système de meubles selon la revendication 1, dans lequel le dispositif de transmission d'énergie (200) est configuré pour délivrer l'énergie sur la base d'une méthode basée sur les ondes radio, en particulier une méthode à haute fréquence.

3. Le système de meubles selon la revendication 1 ou 2, dans lequel le circuit de charge (152) comprend un dispositif de réception d'énergie (132) et un contrôleur de charge (131) qui est configuré pour commander la charge du accumulateur d'énergie (151) avec l'énergie reçue par le dispositif de réception d'énergie (132).

4. Le système de meubles selon la revendication 3, dans lequel le dispositif de transmission d'énergie (200) et le dispositif de réception d'énergie (132) sont conçus pour transmettre suffisamment d'énergie entre le dispositif de transmission d'énergie (200) et le dispositif de réception d'énergie (132) pour charger le accumulateur d'énergie (151) jusqu'à une distance de 50 cm à 150 cm, en particulier jusqu'à une distance de 60 cm à 90 cm.

5. Le système de meubles selon l'une des revendications 1 à 4, dans lequel le dispositif de transmission d'énergie (200) est disposé dans un boîtier du contrôleur (140) ou dans un élément de meuble fixé au meuble.

6. Le système de meubles selon l'une des revendications 1 à 4, dans lequel le dispositif de transmission d'énergie (200) est disposé dans un boîtier séparé.

7. Le système de meubles selon l'une des revendications 1 à 6, le meuble étant réalisé sous la forme d'une chaise longue ajustable (102) et le composant du système étant formé par une table d'appoint (190), le accumulateur d'énergie (151) étant configuré pour alimenter un composant à commande électrique de la table d'appoint (190).

8. Le système de meubles selon l'une des revendications précédentes, dans lequel le composant du système ou un autre composant du système est formé par un dispositif de commande manuelle (150) adapté pour une connexion de communication sans fil avec le contrôleur (140), dans lequel le accumulateur d'énergie électrique (151) est adapté pour alimenter le dispositif de commande manuelle (150) pendant une action de fonctionnement.

9. Le système de meubles selon l'une des revendications précédentes, dans lequel le composant de système ou un autre composant de système du système de meubles est formé par l'un des éléments suivants :
- un composant d'éclairage (191) ;
- un fauteuil ou une chaise à hauteur ajustable électriquement ;
- un dossier ajustable électriquement ;
- un support de moniteur ajustable électriquement ;
- un composant capteur qui est en communication avec le contrôleur (140) lors d'un réglage du meuble (100, 101, 102) .

10. Le système de meubles selon l'une des revendications précédentes qui est configuré pour désactiver le dispositif de transmission d'énergie (200) indépendamment d'un fonctionnement du meuble.

11. Le système de meubles selon la revendication 10, dans lequel la désactivation du dispositif de transmission d'énergie (200) est déclenchée par un utilisateur du système de meubles et/ou par une détection de présence de l'utilisateur sur le système de meubles et/ou en fonction d'un état de charge du magasin d'énergie et/ou commandée par le temps.
